# EUROPÄISCHE PATENTSCHRIFT

(11) **EP 1 869 837 B1**
(45) Veröffentlichungstag und Bekanntmachung des Hinweises auf die Patenterteilung: **30.06.2010**
(21) Anmeldenummer: 06763038.4
(22) Anmeldetag: 18.04.2006
(51) Int. Cl.: H04L 12/437, H04L 12/46, G05B 19/04

(54) **AUSFALL- UND AUSKOPPLUNGSTOLERANTES KOMMUNIKATIONS-NETZWERK, DATENPFAD-UMSCHALTEINRICHTUNG UND ENTSPRECHENDES VERFAHREN**
BREAKDOWN AND DECOUPLING TOLERANT COMMUNICATIONS NETWORK, A DATA PATH SWITCHING DEVICE AND A CORRESPONDING METHOD
RESEAU DE COMMUNICATION TOLERANT AUX PANNES ET AUX DECOUPLAGES, DISPOSITIF D'INVERSION DE CHEMIN DE DONNEES ET PROCEDE CORRESPONDANT

(30) Priorität: 14.04.2005 EP 05102973
(43) Veröffentlichungstag der Anmeldung: 26.12.2007
(73) Patentinhaber: Baumüller Anlagen-Systemtechnik GmbH & Co. KG, 90482 Nürnberg (DE)
(72) Erfinder: MONSE, Matthias, 90480 Nürnberg (DE); MEIS, Harold, 90559 Burgthann (DE)
(74) Vertreter: Götz, Georg Alois
(86) Internationale Anmeldenummer: PCT/EP2006/061624
(87) Internationale Veröffentlichungsnummer: WO 2006/108881

(56) Entgegenhaltungen:
- WO-A-2005/029781
- DE-A1- 3 836 773
- DE-A1- 19 722 189
- US-A- 5 317 198
- US-A- 5 530 694
- US-A- 5 661 720
- US-A- 6 034 798
- US-A- 6 167 026
- PATENT ABSTRACTS OF JAPAN Bd. 016, Nr. 403 (E-1254), 26. August 1992 (1992-08-26) & JP 04 135340 A (MITSUBISHI ELECTRIC CORP), 8. Mai 1992 (1992-05-08)

## Beschreibung

Die Erfindung betrifft ein Verfahren zum Tolerieren eines Ausfalls und/oder einer Auskopplung mindestens eines Netzwork-Knotens in bzw. aus einem Kommunikations-Netzwerk gemäß Oberbegriff des Anspruchs 1. Dieses ist zur Steuerung und/oder Regelung der Bewegung einer Mehrzahl Maschinenteile, beispielsweise Drehkörper in Druck-, Werkzeug- oder sonstigen Produktionsmaschinen, ausgebildet. Das Netzwerk wird entsprechend einer geschlossenen, ein- oder mehrfachen Ringstruktur betrieben. Unter "mehrfacher Ringstruktur" sollen sowohl redundante Ringstrukturen wie Doppelring als auch die Verkopplung mehrer in sich selbständig geschlossener Ring- (Teil-)Netzwerke verstanden werden. In dem Netzwerk kommuniziert jeder Knoten über einen ersten Empfänger oder Port mit einem Sender oder Port eines ersten benachbarten Knotens und über einen zweiten Sender oder Port mit einem Empfänger oder Port eines zweiten benachbarten Knotens. Beim Ausfall oder der Auskopplung wenigstens eines der Knoten wird die geschlossene Ringstruktur beibehalten. Ferner betrifft die Erfindung eine zur Durchführung des Verfahrens geeignete Datenpfad-Umschalteinrichtung, welche interne, ein- und ausgangsseitige Datenanschlussmittel besitzt, gemäß Oberbegriff des Anspruchs 11.

Bei Netzwerken der Prozessautomatisierung besteht die Tendenz, Datenübertragungs-Protokolle aus der Office- und Internetwelt zu integrieren. Dem tragen neuere Standards für Antriebsschnittstellen wie SERCOS-III und EtherCAD Rechnung, bei denen Elemente des aus dem Office-Bereich bekannten Netzwerktyps "Ethernet" unter Echtzeitbedingungen Anwendung finden (sogenannter "Echtzeit-Ethernet-Feldbus"). Zur Toleranz gegenüber Ausfällen einzelner Knoten ("Einfächausfälle") werden in diesen Kommunikationssystemen Doppelringstrukturen verwendet, bei denen zwei voneinander unabhängige Kommunikationskanäle gegenläufige Ringübertragungen ermöglichen. Dies ergibt sich aus der Ethernet-Physik. Aufgrund der damit redundanten Datenübertragung bleibt bei einer Kabelunterbrechung oder einem Teilnehmer/Knotenausfall an einer beliebigen Stelle des Rings die Kommunikationsfähigkeit vollständig erhalten. Die Unterbrechung der Ringstruktur ist nämlich auf den Störungsort begrenzt. Der Kommunikationsmaster kann bei Leitungsbruch und/oder Knotenausfall die im Ring beidseits der Störungs- und Unterbrechungsstelle liegenden Ringteile weiterhin kontrollieren.

Fallen bei dem vorbekannten Kommunikations-Doppelring allerdings zwei voneinander getrennte bzw. beabstandete Ringabschnitte aus, sind die Teilnehmer/Knoten des Kommunikationssystem zwischen den ausgefallenen oder auch abgeschalteten Abschnitten für den Kommunikationsmaster oder einer sonstigen Leitsteuerung jedenfalls über den Ring nicht mehr erreichbar.

Aus EP-B-1 249 763 (Siemens AG) ist ein Datenübertragungssystem für Werkzeug- und Produktionsmaschinen sowie Roboter bekannt. Von einer zentralen Datenleitung zweigen stichartig Datenleitungen, in denen Signalverarbeitungseinheiten mit Sendern und Empfängern angeordnet sind, ab. Letztere leiten die Daten seriell innerhalb einer Ringstruktur weiter. Einzelne Ringnetzwerke sind jeweils von einem Kommunikationsmaster gesteuert, welche wiederum in einer in sich geschlossenen Ringstruktur zusammengefasst sind, so dass ein Ausfall eines Kommunikationsmasters nicht dazu führt, dass die gesamte Kommunikationsstruktur komplett ausfällt. Den Kommunikationsmastern sind Ersatz-Kommunikationsmaster zur Seite gestellt, die mit benachbarten Kommunikationsmastern über Zusatzleitungen gekoppelt sind, welche nach Art des Bypass-Prinzips verlaufen. Fällt ein Kommunikationsmaster mit Gruppenleitfunktion aus, so ist durch die Ersatz-Kommunikationsmaster gewährleistet, dass eine jeweils ringförmige Teilkommunikationsstruktur weiter arbeiten kann. Der Ersatz-Kommunikationsmaster übernimmt in diesem Fall nahtlos die Gruppenleitfunktion und dominiert die Signalverarbeitungseinheiten des zugehörigen Teilkommunikationsrings. Mit Hilfe der Zusatzverbindungen (Bypass-Leitungen) wird der jeweils ausgefallene Kommunikationsmaster überbrückt. Allerdings führen diese Daten- bzw. Kommunikations-Bypassleitungen zu einem deutlich erhöhten und unübersichtlichen Hardwareaufwand. Außerdem ist keine Vorsorge gegen Mehrfachausfall oder - Abschaltung von untergeordneten Slave-Signalverarbeitungknoten getroffen.

In DE-A-101 29 572 (Siemens AG) ist eine Datenpfadselektiereinrichtung mit mehreren Datenanschlüssen für ein leitungsgebundenes Datenübertragungssystem beschrieben. Zwischen den Datenanschlüssen der Datanpfadselektiereinrichtung sind beliebige Datenverbindungen einstellbar. So können Kommunikationsnetzwerke mit anderen Kommunikationsnetzwerken gekoppelt werden. Es wird auch die Verwendung von echzeitfähigem Ethernet für ringförmig vernetzte Antriebsregler angesprochen. Fällt eine Maschineneinheit und/oder deren Antriebe aus, so können sie mittels der Datenpfadselektiereinrichtung aus der Datenkommunikation ausgekoppelt werden. Dabei lässt sich mittels der Datenselektiereinrichtung eine datentechnische Neuzuordnung der verbliebenen Signalverarbeitungseinheiten/Antriebsregler mit zugeordneten Maschinenteilen Innerhalb des Gesamt-Steuerungsnetzwerkes durchführen.

US-A-6 167 026 offenbart für ein Ringnetzwerk mit einem Einfach-Ring eine programmierbare Steuerungsschaltung mit Fehlererkennung. Damit soll ein Mechanismus zum automatischen Umgehen eines Netzwerk-Knotens oder Ringsegments geschaffen werden, wenn der Netzwerk-Knoten oder das Ringsegment Fehler erzeugen, welche eine vorprogrammierte Schwelle übersteigen. Für eine entsprechende Bypass-Umschaltung wird ein Hub-Port mit einem Sende- und einem Empfangskanal zum anzukoppelnden Netzwerk-Knoten eingesetzt, welche mit einem zweikanaligen Multiplexer zur Realisierung des Bypass verbunden sind.

US-A-5 530 694 beschreibt eine Einrichtung zur Verbindung eines Netzwerk-Knotens mit einem lokalen Ringnetzwerk. Dazu wird eine Umschaltanordnung zur Umgehung des betreffenden Netzwerk-Knotens bzw. der betreffenden Netzwerkstation vorgeschlagen, wenn letztere heruntergefahren worden ist. Mit dieser Einrichtung soll auch eine Mehrzahl von Netzwerkstationen vom Ringnetzwerk abgetrennt werden können, ohne dass der Netzwerkbetrieb ernsthaft beeinträchtigt wird. Als Ring-Netzwerk werden zwei parallel nebeneinander gegenläufig verlaufende Einfach-Ringe eingesetzt, denen jeweils ein separates, bidirektionales Anschlussport zugeordnet ist. Über das erste Anschlussport wird die anzukoppelnde Netzwerkstation mit dem ersten Einfach-Ring, und über das zweite Anschlussport mit dem zweiten Einfach-Ring verbunden. Die beiden Anschlussmodule besitzen jeweils eine Umschaltlogik, womit die anzukoppelnde Station überbrückt werden kann. Eine Verkopplung der beiden Einfach-Ringe ist aufgrund der voneinander getrennten, entkoppelten Anordnung der beiden Anschlussports nicht vorgesehen.

Anders nach der DE-A-38 36 773, worin eine Netzanschlussschaltung zur aktiven Ankopplung von Netzstationen in lokalen Netzwerken mit Doppelring-Übertragungssystemen offenbart ist. Für jede der beiden Übertragungsrichtungen ist sowohl ein Empfänger als auch ein Sender vorgesehen, zwischen welchen über logische Gatter die Nachrichtenströme von oder zur anzukoppelnden Netzstation geleitet werden. Ringschalter und Umkehrschalter sollen eine flexible Anwendung der Netzanschlussschaltung für unterschiedlichste Netzwerkkonfigurationen gewährleisten. Zur Ankopplung der Netzstation an den Doppelring sind die logischen Gatter zur Bildung eines einzigen bidirektionalen Verbindungs-Ports angeordnet. Dadurch ergibt sich die Kommunikationsproblematik, dass gegenläufige Datenströme von je einem Teil des Doppelrings über das logische Gatter, im offenbarten Ausführungsbeispiel ODER-Gatter, zusammentreffend bzw. miteinander kollidierend an den Empfänger der anzukoppelnden Netzstation weitergegeben werden. Der von der anzukoppelnden Netzstation gesendete Datenstrom wird parallel und ohne Unterscheidungsmöglichkeit auf jeden der beiden gegenläufigen Teile des Doppelrings gesendet.

Demgegenüber wird das im Patentanspruch 1 angegebene Ausfall- und/oder Auskopplungsverfahren vorgeschlagen. Im unabhängigen Patentanspruch 11 ist eine für die Ausführung des Verfahrens geeignete Datenpfad-Umschalteinrichtung angegeben. Vorteilhafte, optionale Ausgestaltungen der Erfindung ergeben sich aus den abhängigen Ansprüchen.

Indem erfindungsgemäß die Netzwarkknoten/Teilnehmer über eine Umschalteinrichtung an den oder die Datenpfade des ringartigen Netzwerks angekoppelt sind, lassen sich bei Erkennung eines oder sogar auch mehrerer Ausfälle oder Auskopplungen/Abtrennungen dadurch entstehende Lücken in der Ringkette der Knoten mittels der Schaltmittel in der oder den Umschalteinrichtungen durch Umleiten des oder der Datenströme umgehen. Der bisher über den nun ausgefallen oder ausgekoppelten Knoten verlaufene Datenstrom wird durch die Umschalteinrichtung so umgeleitet, dass dieser Knoten nach Art eines Bypass umgangen wird. Die Umschalteinrichtung sorgt dafür, dass intakt und funktionsfähig im Ringnetzwerk noch verbliebene und zueinander nächstliegende Teilnehmer mit ihren Sendern und Empfängern zum Datenaustausch neu aneinandergekoppelt werden.

Mit der Erfindung lassen sich der verwendeten Ringstruktur die Vorteile einer Stem-Topologie verleihen, weil über die erfindungsgemäße Schaltintelligenz es möglich wird, jeden aktiven Knoten/Kommunikationsteilnehmer ausschalten zu können, ohne dass darüber hinaus die Ring-Kommunikation beeinträchtigt wird. Eine maximale Verfügbarkeit beziehungsweise Robustheit gegenüber Ausschalen wird so erreicht.

Damit der oben angesprochene Selbstheilungs-Mechanismus ("self repair") schnell und zuverlässig angestoßen werden kann, ist nach einer Ausbildung der Erfindung die Umschalteinrichtung mit einer internen, vorzugsweise fest verdrahteten Logik versehen, welche bei Erkennung eines Fehlers oder einer Abtrennung das Umleiten der Datenströme bzw. den Datenbypassbetrieb anstößt. Die der Umschalteinrichtung interne Logik kann dazu programm- und/oder schaltungstechnisch eingerichtet sein, Fehlererkennungssignale betreffend die Kommunikationsfähigkeit mit externen Knoten auszuwerten und zu verarbeiten. So liegt es im Rahmen der Erfindung, dass ein Empfänger in der erfindungsgemäßen Umschalteinrichtung zur Ausfallerkennung ein Kommunikationsflag generiert, wonach der externe Knoten kommunikationsfähig ist oder nicht. Das Kommunikationsflag wird zweckmäßig so schnell wie möglich erzeugt, um die Kommunikation so gering wie möglich zu beeinträchtigen. Dazu werden zum Beispiel verfügbar Statusinformationen des Ethernet Physical Layer Transceivers in geeigneter Weise verknüpft. Für den letzteren Fall sorgt die der Umschalteinrichtung interne Logik dafür, dass der interne Empfänger nebst daran angekoppelten, ausgefallenen Knoten vom Ringnetzwerk abgetrennt wird. Analog wird auch beim Lösen/Trennen eines Knoten/Teilnehmers vom Ringnetzwerk verfahren.

Im Rahmen der Erfindung liegt es, die der Umschalteinrichtung interne Logik dahingehend auszubauen, dass eine Prozessbaugruppe oder Prozessormittel vorgesehen werden, welche für die Ankopplung eines gegenüber dem ringförmigen Echtzeit-Feldbus andersartigen Datenverarbeitungssystems sorgen können. Bei dem Datenverarbeitungssystem kann es sich beispielsweise um einen konventionellen Büro-Personalcomputer oder um einen nach dem Internetprotokoll arbeitenden Datenübertragungskanal (IP-Kanal) handeln.

Bei auf der Basis des Master/Slave-Prinzips arbeitenden Ring-Feldbussen ist mit der genannten Erfindungsausbildung eine Weiterentwicklung dahingehend eröffnet, dass die genannten Prozessormittel derart programmiert werden, dass die Umschalteinrichtung gleichsam als Kommunikationsmaster im ringförmigen Netzwerk arbeiten kann. Eine derart ausgestaltete Umschalteinrichtung kann noch zusätzlich mit einem oder mehreren Ports für Informationsübertragung versehen sein, worüber sich externe Kommunikationssysteme anschließen lassen. Die aufgrund der Prozessormittel zur Verfügung stehende Intelligenz der Umschalteinrichtung lässt sich durch Programmiermaßnahmen auch dazu verwenden, die oben erläuterte Umschaltprozedur im Falle von Ausfällen oder des Abtrennens von Teilnehmern/Netzwerkknoten zur genannten Umleitung der Datenströme als Softwaremodul einzurichten.

Weitere Merkmale, Einzelheiten, (Unter-) Kombinationen, Vorteile und Wirkungen ergeben sich aus der nachfolgenden Beschreibung anhand der Zeichnungen. Diese zeigen in:
Figur 1 eine nicht erfindungsgemäße Prinzipschaltskizze einer für eine Einfachringstruktur ausgelegten Datenpfad-Umschalteinrichtung,
Figur 2 eine Prinzipschaltskizze einer für einen Doppelring ausgelegten Datenpfad-Umschalteinrichtung, nach der Erfindung,
Figur 3A und M eine Prinzipschaltskizze einer mit Prozessormitteln realisierten Koppeleinrichtung zum Arbeiten als Slave- beziehungsweise Masterknoten,
Figur 4 ein Prinzipschaltbild einer mit Prozessormitteln ausgestatteten Koppeleinrichtung zur Bildung zweier Masterknoten,
Figur 5 eine Prinzipschaltskizze eines Netzwerk-Repeaters,
Figur 6A ein schematisches Blockschaltbild eines Doppelring-Kommunikationsnetzwerkes mit schaltbaren Echzeit-Ethernet-Anschlüssen,

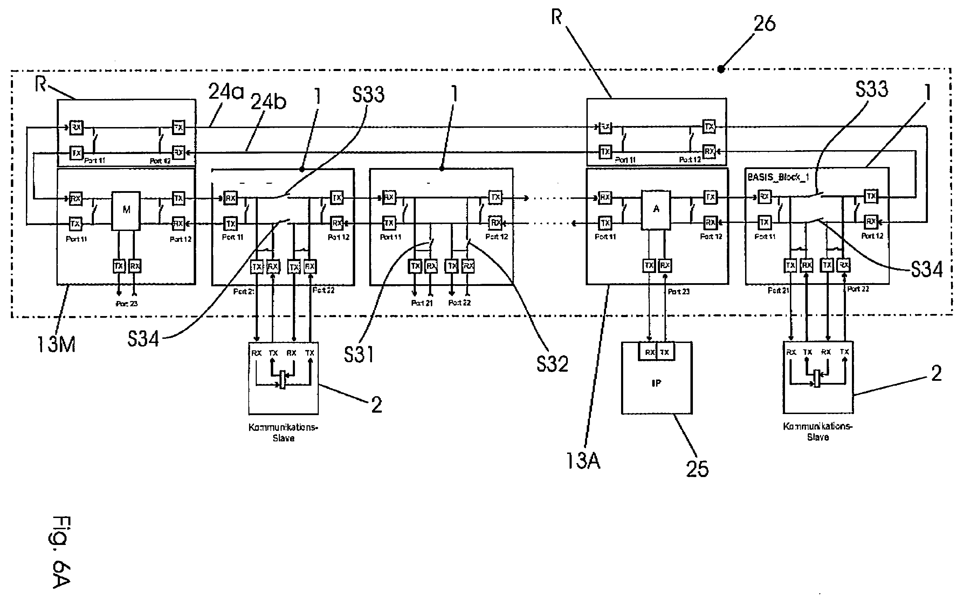

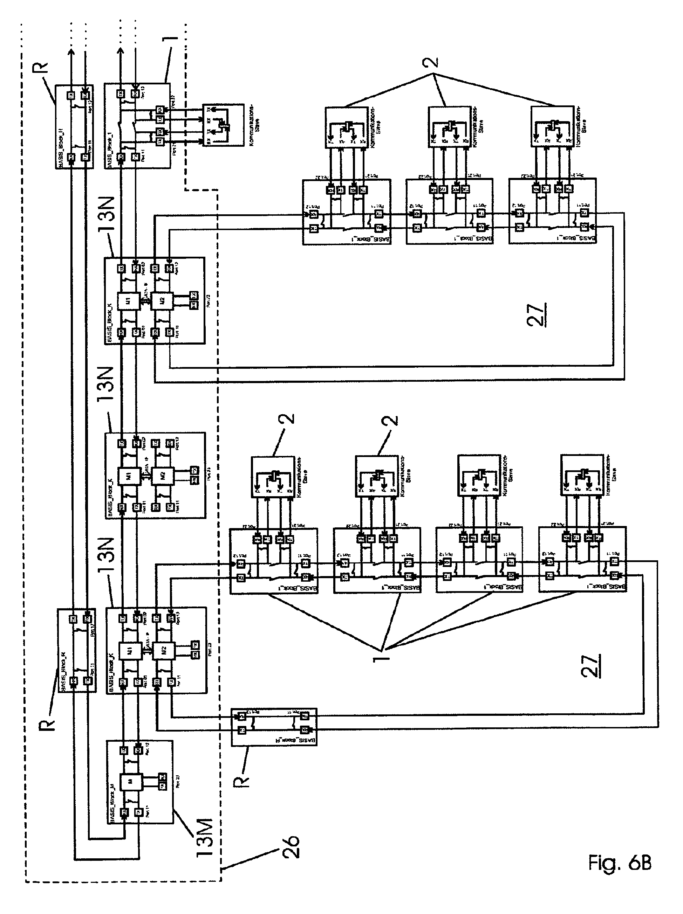

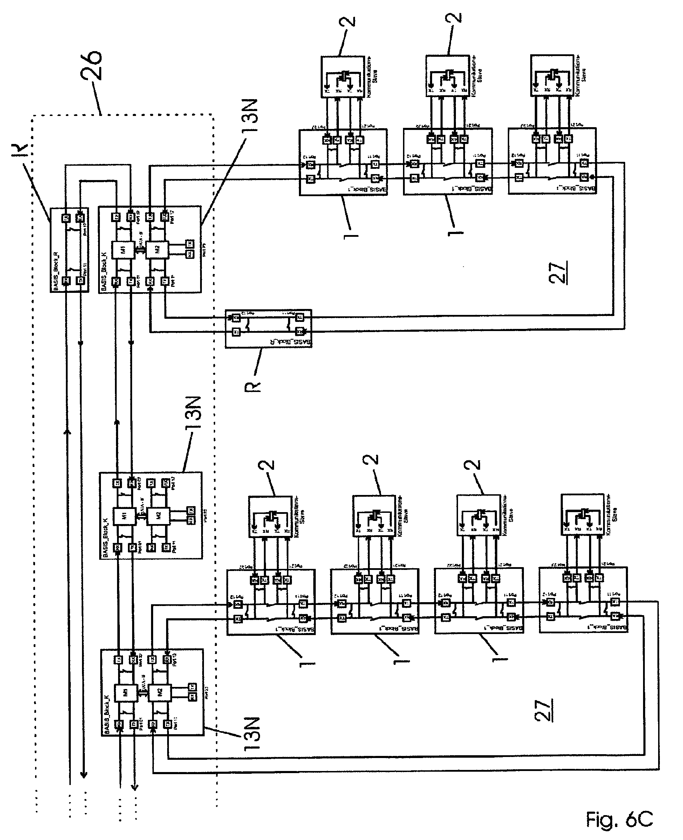

Figur 6Bein schematisches Blockschaltbild gekoppelter Doppelring-Strukturen mit schaltbaren Echtzeit-Ethernet-Anschlüssen (sogenannte Kamm-Struktur),
Figur 6C eine Fortsetzung der Figur 6B

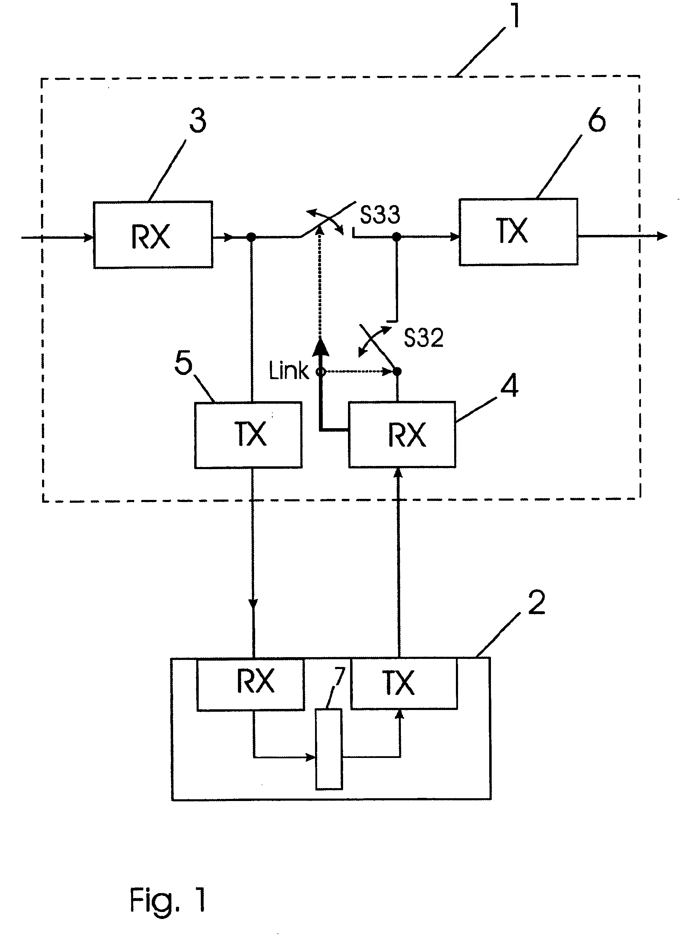

Gemäß Figur 1 ist die dortige Datenpfad-Umschalteinrichtung 1 mit Datenanschlussmitteln RX, TX versehen, um einerseits mit einem anzukoppelnden Netzwerkknoten 2 und andererseits mit weiteren (nicht gezeichneten) Netzwerk-Knotenl-Teilnehmem zu kommunizieren. Auch dieser ist hierfür mit Datenanschlussmitteln RX, TX ausgestattet.

Die Datenanschlussmittel der Umschalteinrichtung 1 umfassen einen Längsempfänger 3, einen Querempfänger 4, einen Quersender 5 und einen Längssender 6. Der eingangsseitige Längsempfänger 3 und der ausgangsseitige Längssender 6 dienen jeweils der Kommunikation mit im Ringnetzwerk benachbarten Umschalteinrichtungen oder sonstigen Knoten. Die beiden Kommunikationsorgane 3, 6 sind gleichsam "entlang/in Längsrichtung" des ringförmigen Kommunikationskanals ausgerichtet, von daher die Bezeichnung "Längs"-Empfänger/-Sender. Bildlich betrachtet verlaufen dazu "quer" die Kommunikationsrichtungen der beiden anderen Kommunikationsorgane 4, 5, die der Ankopplung des Knotens 2 dienen (von daher "Quer"-Empfänger/-Sender). Der Eingang des Quersenders 5 ist direkt mit dem Ausgang des Längsempfängers 3 verbunden, im gezeichneten Beispiel ohne Zwischenschaltung einer weiteren Baukomponente. Der Ausgang des Quersenders 5 speist das Empfangsorgan RX des anzukoppelnden Knotens 2. Von da verläuft der Datenstrom über eine im Knoten 2 interne Verarbeitungseinheit 7, die ihre Ausgangsdaten über das Sendeorgan TX dem Querempfänger 4 der Umschalteinrichtung 1 zuleitet. Dessen Ausgang liegt an einem beispielhaft eingesetzten Unterbrechungsquerschalter S32, der im geschlossenen Zustand den Datenstrom zum Eingang des Längssenders 6 durchleitet. Der Querempfänger 4 besitzt interne Überwachungsmittel (nicht gezeichnet), welche auf die Kommunikationsfähigkeit des Knotens 2 bzw. von dessen Sendeorgan TX ansprechen und ein entsprechendes Kommunikationsflag "Link" erzeugen. Ist Link "wahr" bzw. "1", liegt Kommunikationsfähigkeit vor, andernfalls nicht. Ist Link "falsch" bzw. "0", wird davon (gestrichelt gezeichnet) der Unterbrechungsquerschalter S32 zum Öffnen betätigt. Mithin wird der Ausgang des Querempfängers 4 der Umschalteinrichtung 1 vom Ringnetzwerk abgetrennt. Von dem Flag "Link" wird ferner ein weiterer Unterbrechungslängsschalter S33 kontrolliert. Im Falle von Link="wahr" bzw. "1", ist der Unterbrechungslängsschalter S33 in Öffnungsstellung, so dass der vom Längsempfänger 3 eintreffende Datenstrom den anzukoppelnden Knoten 2 nicht umgehen kann. Lässt sich dort über den Querempfänger 4 ein Fehler oder Abtrennen feststellen, wird dies über das Kommunikationsflag Link="falsch" erkannt, wobei der Unterbrechungslängsschalter S33 zum Schließen betätigt wird. Bei geschlossenem Längsschalter S33 und gleichzeitig geöffnetem Querschalter S32 liegt eine Überbückung der Quer-Kommunikationsorgane 4, 5 der Umschalteinrichtung 1 vor, was auch für den (ehemals) anzukoppelnden Knoten 2 gilt. Der vom sonstigen Ringnetzwerk aufgenommene Datenstrom gelangt aus dem Querempfänger 3 direkt zum Längssender 6, wo er im Ringnetzwerk weitergeleitet wird.

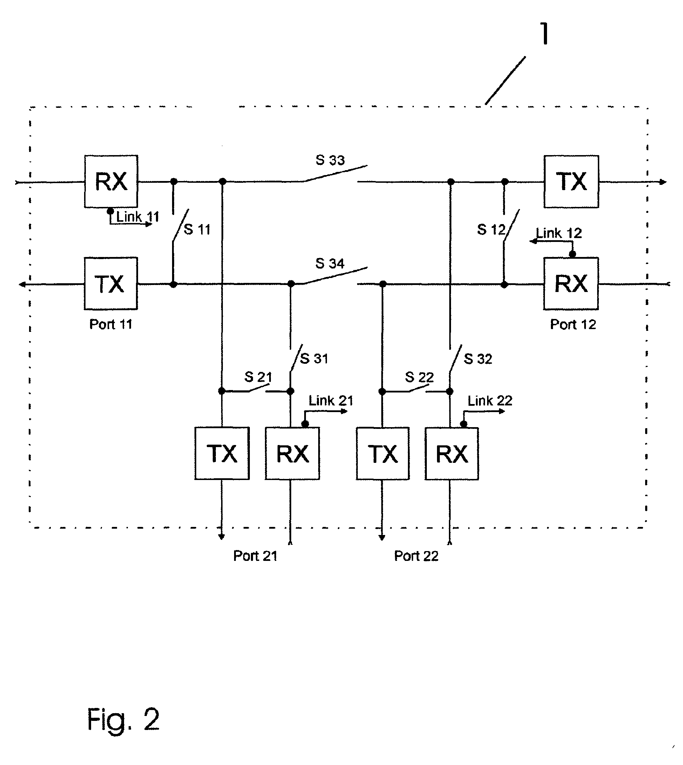

Gemäß Figur 2 weist die für eine Doppelringstruktur ausgelegte Überwachungseinrichtung 1 vier bidirektionale Ports zur Echtzeit-Ethernet-Kommunikation auf, nämlich die beiden Längsports 11, 12 und die beiden Querports 21, 22. Diese bidirektionalen Echtzeit-Ports bilden Anschlüsse für Verbindungskabel, über das eine Teilstrecke der Ringstruktur realisiert wird. Jeder Port besteht aus einem Anschluss bzw. Sender TX, über den Daten auf die Teilstrecke gesendet werden, und einem Anschluss bzw. Empfänger RX, über den Daten aus der Teilstrecke empfangen werden. Die Empfänger besitzen logische Zustände bzw. Eigenschaften, verdeutlicht durch das Kommunikationsflag "Link". Es wird "wahr" bzw. "1", sobald erkannt wird, dass auf den Empfänger RX ein kommunikationsfähiger Teilnehmer bzw. Knoten sendet. Bei fehlender Kommunikationsfähigkeit wird Link "falsch" bzw. "0". In einem solchen Fall erfolgt selbsttätig eine interne Verbindung des Empfängerausgangs mit dem Sendereingang (sogenannter "Loopback-Betrieb"). Wird an einem Port im Loopback-Betrieb ein Kommunikationspartner angeschlossen, erkennen beide Ports jeweils ein Link-Signal. Der Loopback-Zustand kann von einem Kommunikationsmaster beeinflusst werden. Alternativ liegt es auch im Rahmen der Erfindung, dass jeder Port seine Umschaltung in den Loopback-Betrieb automatisch beziehungsweise selbsttätig entsprechend seinem eigenen Kommunikationsflag "Link" vornimmt.

Gemäß Figur 2 lässt sich in den Ports jeweils ein Loopback-Betrieb mittels zugeordneter Loopback-Schalter S11, S12, S21, S22 herbeiführen, welche den Empfängerausgang und den Sendereingang eines jeweiligen Ports miteinander verbinden beziehungsweise kurzschließen, wenn das jeweilige Kommunikationsflag "falsch" beziehungsweise "0" ist, das heißt, auf fehlende Kommunikationsfähigkeit des angeschlossenen Teilnehmers/Knotens hinweist. Die Loopback-Schalter S11, S12, S21, S22 werden zum Unterbrechen beziehungsweise Trennen des jeweils Sendereingangs und Empfängerausgangs voneinander angesteuert, wenn das jeweilige Kommunikationsflag "wahr" ist, das heißt, auf eine Kommunikationsfähigkeit des angeschlossenen Teilnehmers/Knotens hinweist. Die Funktion ergibt sich aus folgender Wahrheitstabelle :

| |
|---|
| • *S11* ist geschlossen, wenn LINK(*Port11*)=FALSCH, andernfalls geöffnet |
| • *S12* ist geschlossen, wenn LINK(*Port12*)=FALSCH, andernfalls geöffnet |
| • *S21* ist geschlossen, wenn LINK(*Port21*)=FALSCH, andernfalls geöffnet |
| • *S22* ist geschlossen, wenn LINK(*Port22*)=FALSCH, andernfalls geöffnet |

Entsprechend dem Einsatz für eine doppelte Ringstruktur sind jeweils zwei Unterbrechungslängsschalter S33, S34 und zwei Unterbrechungsquerschalter S31, S32 vorgesehen. Die Unterbrechungslängsschalter S33, S34 unterbrechen im geöffneten Zustand die beiden gegenläufigen Datenkanäle zwischen den beiden Längsports 11, 12 oder geben im geschlossenen Zustand diese für den Datenstrom frei. Dazu ist der eine Unterbrechungslängsschalter S33 zwischen dem Empfängerausgang des ersten Längsports 11 und dem Sendereingang des zweiten Längsports 12 eingefügt, und der zweite Unterbrechungslängsschalter S34 befindet sich analog zwischen dem Empfängerausgang des zweiten Längsports 12 und dem Sendereingang des ersten Längsports 11. Die beiden Unterbrechungsquerschalter S31, S32 liegen einerseits am jeweiligen Empfängerausgang der beiden Querports 21, 22 und andererseits an demjenigen Anschluss der beiden Unterbrechungslängsschalter S33, S34, der jeweils dem Sendereingang der beiden Längsports 11, 12 am nächsten liegt. Die Funktion der Unterbrechungslängs- und -Querschalter S31-S34 ergibt sich aus nachstehender Wahrheitstabelle :

| |
|---|
| • (S33 UND S34) sind geschlossen, wenn (LINK(*Port21*)=FALSCH UND LINK(*Port22*)=FALSCH), andernfalls geöffnet |
| • (*S31* UND *S32*) sind geöffnet, wenn (LINK(*Port21*)=FALSCH UND LINK(*Port22*)=FALSCH), andernfalls geschlossen |

Über die Unterbrechungslängsschalter S33, S34 mit Unterstützung durch die Unterbrechungsquerschalter S31, S32 lassen sich die beiden Querports 21, 22 gemeinsam überbrücken. Durch den spezifizierten Einsatz wenigstens der Längsschalter S33,S34, gegebenenfalls auch der Querschalter S31,S32 gemäß Figuren 1 und 2 lässt sich der zunächst unterbrochene Kommunikationsring wieder schließen, und die Daten können im Kommunikationsring einfach weitergeführt werden, obgleich der anzukoppelnde Knoten ausgefallen oder von der Kopplung am Kommunikationsring gelöst wurde. Dies wird noch dadurch unterstützt, dass bei Link21 = falsch und Link22 = falsch der jeweilige Sendereingang mit dem Empfängerausgang im jeweiligen Querport 21, 22 kurzgeschlossen ist (Loopback-Betrieb). Damit dabei nicht ein weiterer Kurzschluss zwischen den beiden über die Unterbrechungslängsschalter S33, S34 laufenden Verbindungsleitungen zwischen den beiden Längsports 11, 12 entsteht, ist es zweckmäßig, dass die beiden Unterbrechungsquerschalter S31, S32 im Falle fehlender Kommunikationsfähigkeit (Kommunikationflags Link 21 und Link 22 sind jeweils "falsch") geöffnet sind und die Leitungen für Loopback-Betrieb von der Überbrückung durch die Längsschalter trennen.

Vorzugsweise sind die Schalter S11-S34 elektronisch und/oder fest verdrahtet realisiert, beispielsweise mittels Halbleiterschalter. Es liegt aber auch im Rahmen der Erfindung, die mit den Schaltern gemäß Fig. 1 oder 2 realisierte Umschaltlogik durch ein programmierbares Schaltwerk, programmierbare Logikfelder und/oder durch in einem Mikrorechner implementierte Software zu realisieren. An diese Bausteine wären dann noch die Sender 5, 6 und Empfänger 3, 4 gemäß Fig.1 oder Ports 11, 12, 21, 22 gemäß Fig. 2 anzuschließen, wenn nicht mit den genannten Bausteinen bereits integriert.

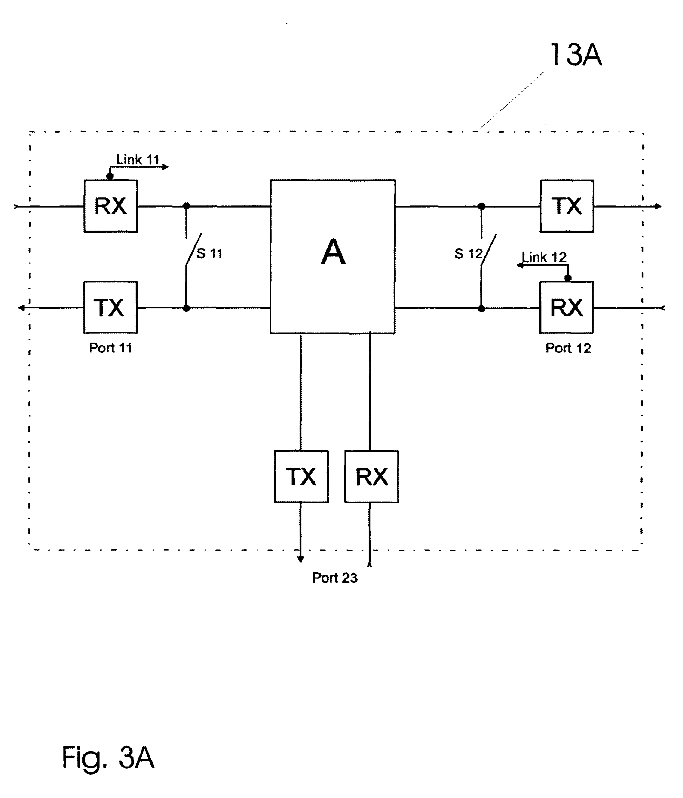

Gemäß Figur 3A ist eine Koppeleinrichtung zum Koppeln von beispielsweise einem oder mehreren IP-Kanälen mit dem ringartigen Echtzeit-Ethernet-Feldbus vorgesehen. Die Koppeleinrichtung 13 besteht aus zwei bidirektionalen Echtzeit-Längsports 11, 12 mit jeweils zugeordneten Loopback-Schaltern S11, S12. Zwischen den beiden Längsports 11, 12 ist eine Prozessbaugruppe A eingefügt, in welcher die Funktionalität des Einkoppelns implementiert ist. Der IP-Kanal lässt sich über ein bidirektionales Querport 23 anschließen, wodurch die Verbindung zur Prozessbaugruppe A hergestellt ist. Diese kann mittels geeigneter Software beispielsweise normale Ethernettelegramme, erhalten aus dem Querport 23 und dem angeschlossenen IP-Kanal, in den Echtzeit-Ethernet-Feldbus zwischen den beiden Längsports 11, 12 hineinübertragen. Dazu sind die Funktionen für Busmanagement und Telegrammkommunikation in der Prozessbaugruppe A, beispielsweise realisiert mit einem sogenannten Embedded PC, hinterlegt. Darüber hinaus lässt sich, wie bereits angesprochen, auch die Umschaltlogik gemäß Figur 1 und 2 softwaremäßig in der Prozessbaugruppe A implementieren.

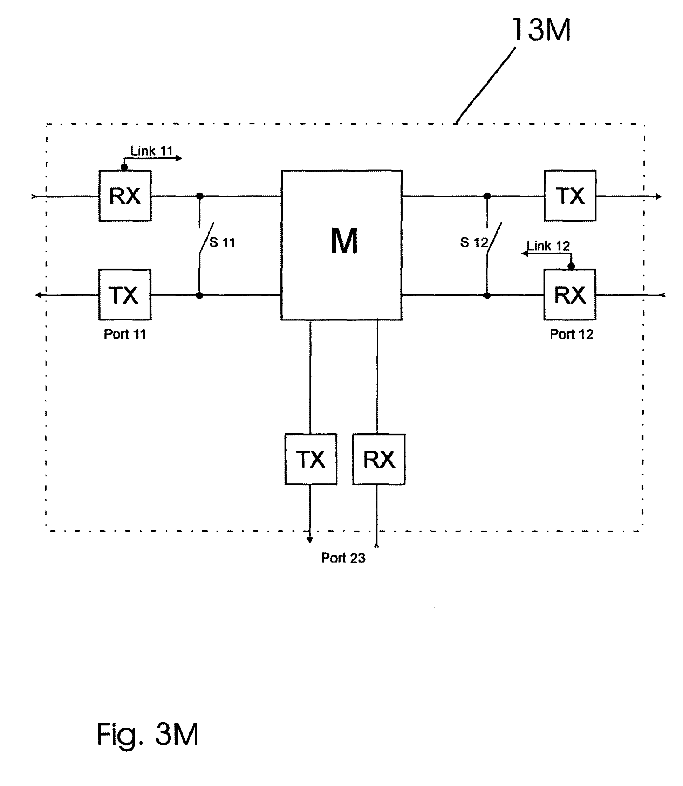

Letzteres gilt auch für die in Figur 3M gezeichnete Prozessbaugruppe M in einer Master-Koppeleinrichtung 13M. Gemäß Figur 3M ist die Prozessbaugruppe M dahingehend erweitert, dass noch zusätzlich Funktionen eines Kommunikationsmasters hinterlegt sind (vgl. "M" für die Prozessbaugruppe). Pro Echtzeit-Ethernet-Feldbus kann nur eine Prozessbaugruppe M aktiv sein. Sie kann außerdem (wie bei der Prozessbaugruppe A gemäß Figur 3A) ebenfalls Funktionen zum Einkoppeln von einem oder mehreren IP-Ports unterstützen. Sind weitere solcher Master-Koppeleinrichtungen 13M im selben Bussegment vorhanden, bleiben deren Masterfunktionen inaktiv, und nur die Funktion zum Einkoppeln von IP-Ports oder dergleichen ist nutzbar.

Mit den Koppeleinrichtung 13A, 13M gemäß Figuren 3A, 3M lassen sich Standard-Ethernet-Telegramme so in den Echtzeit-Ethernet-Feldbus mit der Ringstruktur einspeisen, dass die Übertragung der Echtzeitdaten nicht gestört wird. Dazu dient der jeweils gemäß Figur 3A bzw. Figur 3M vorhandene bidirektionale Querport 23, worüber IP-Kanäle und dergleichen an den ringartigen Echtzeit-Ethernet-Feldbus angeschaltet werden können.

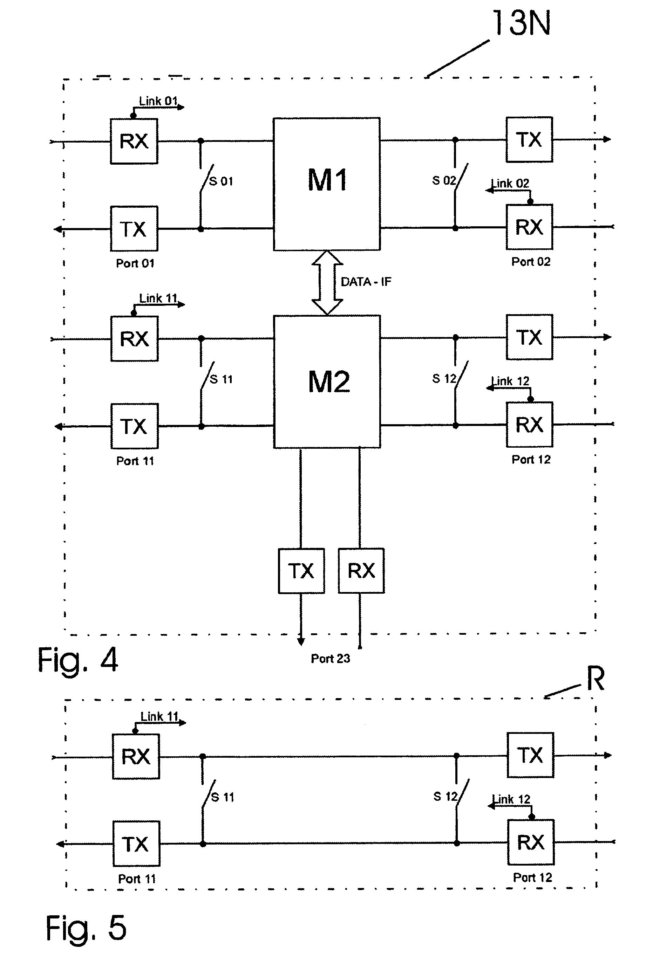

Gemäß Figur 4 weist eine Netzwerk-Koppeleinrichtung 13N vier bidirektionale Echtzeit-Längsports 01, 02, 11 und 12, denen jeweils Loopback-Schalter S01, S02, S11 und S12 zugeordnet sind, sowie zwei Prozessbaugruppen bzw. Prozessoreinheiten M1, M2 auf, die über eine interne Datenschnittstelle DATA-IF (vorzugsweise parallele Schnittstelle) Daten und Informationen austauschen können. Die genannten Schalter S01-S12 werden abhängig vom jeweiligen Empfänger-Kommunikationsflag Link 01, Link 11, Link 02, Link 12 betätigt. Weist das jeweilige Kommunikationsflag mit dem Binärwert "1" auf Kommunikationsfähigkeit des externen Kommunikationspartners hin, ist der zugehörigen Schalter geöffnet, andernfalls geschlossen. Die beiden Prozessbaugruppen M1, M2 dienen als Kommunikationsteilnehmer in einem Echtzeit-Ethernet-Feldbus und zwar wahlweise als Kommunikationsmaster oder als Kommunikations-Slave. Über die Datenkopplung bzw. Schnittstelle DATA-IF zwischen den beiden Prozessbaugruppen M1, M2 ist es möglich, Dateninhalte zwischen zwei getrennten Feldbussegmenten mit jeweils eigenem Kommunikationsmaster auszutauschen. Die beiden Prozessbaugruppen M1, M2 sind jeweils mit zwei der insgesamt vier Längsports 01, 02, 11, 12 verbunden. Über die der ersten Prozessbaugruppe M1 zugeordneten Längsports 01, 02 ist ein Anschluss an einen Echtzeit-Ethernet-Ring möglich. Dasselbe gilt für die zweite Prozessbaugruppe M2 mit den angeschlossenen Längsports 11, 12 im Zusammenhang mit einem zweiten, separaten Echtzeit-Ethemet-Ring. Über die Datenschnittstelle DATA-IF ist somit eine Kopplung dieser beiden Ethernet-Ringe gegeben.

Zur Signalverstärkung ist gemäß Figur 5 ein Repeater R vorgesehen, der zwei bidirektionale Echtzeitports 11, 12 jeweils mit einem Ausgang für ein Kommunikationsflag Link 11, Link 12 aufweist. Beiden Längsports ist je ein Loopback-Schalter S11, S12 zugeordnet.

Gemäß Figur 6A handelt es sich bei dem dargestellten Kommunikationssystem um einen Echtzeit-Ethernet-Feldbus in Doppelring-Struktur mit einem Kommunikationsmaster, der für das Bus- und Kommunikationsmanagement verantwortlich ist. Gemäß gezeichnetem Ausführungsbeispiel ist der Kommunikationsmaster mit einer Masterkoppeleinrichtung 13M (vgl. Figur 3M) realisiert. Über das dortige, an die Prozessbaugruppe angeschlossene Querport 23 kann der Kommunikationsmaster mit einem externen Kommunikationspartner, zum Beispiel übergeordnete Leitsteuerung oder IP-Kanal, in Verbindung treten. Der Feldbus weist ferner eine Mehrzahl Notzwerkknoten 2 auf die über jeweilige Umschalteinrichtungen 1 (vgl. Figur 2) mit den jeweiligen Doppelports 21, 22 an der Kommunikation aktiv teilhaben. Die Kommunikation ist ringförmig organisiert, das heißt, die vom Kommunikationsmaster 13M versendeten Daten gelangen nach Empfang durch alle sonstigen Netzwerkknoten 2 bzw. Kommunikationsslaves wieder zurück zur Masterkoppeleinrichtung 13M. In jeder Teilstrecke zwischen einzelnen Netzwerkknoten können die Daten gleichzeitig in beiden Richtungen übertragen werden. Diese beiden gegenläufigen Datenübertragungskanäle sind in Figur 6A durch die beiden Leitungspaare 24a, 24b angedeutet. Aufgrund der Vorgaben der Ethemetphysik, wonach elektrische Differenzsignale übertragen werden, werden für eine Datenübertragungsrichtung physikalisch zwei elektrische Leitungen benötigt. Die Doppelringstruktur ergibt sich dadurch, dass vom Kommunikationsmaster 13M aus die beiden parallelen gegenläufigen Teilstrecken von Knoten/Teilnehmer 2 zu Knoten/Teilnehmer 2 (teilweise Slaves) und abschließend über die beiden Repeater R wieder zurück zum Master gezogen sind. Bereits aufgrund dieser Doppolringstruktur besitzt der Feldbus eine Toleranz gegen Einzelstörungen und Einzelausfälls (zum Beispiel Kabelbruch oder Teilnehmerausfall) in der logischen Ringkommunikation, wie an sich bekannt. Allerdings wären bei einer weiteren Unterbrechung nur die Teilnehmer erreichbar, die jeweils zwischen dem Master und der nächsten Unterbrechung liegen, nicht aber zwischen zwei Unterbrechungen. Außerdem ist das Abschalten beziehungsweise Abtrennen mehrerer Teilnehmer bei den vorbekannten Doppelringstrukturen nicht mehr tolerierbar, weil das Gesamtsystem entscheidend beeinträchtigt wird. Dies kann aber bei großen, räumlich ausgedehnten Busstrukturen notwendig werden.

Gemäß Figur 6A sind in die Doppelringstruktur als schaltbare Abgänge erfindungsgemäße Umschalteinrichtungen 1 gemäß Figur 2 eingefügt, woran als aktive Kommunikationsteilnehmer und Netzwerkknoten 2 Kommunikationsslaves angeschlossen sind. Der Anschluss erfolgt über die Querports 21, 22. Zum Anschluss eines IP-Kanals 25 oder dergleichen ist in die Ringkette ferner eine Koppeleinrichtung 13A mit einem Embedded PC als Prozessbaugruppe A eingegliedert. Obgleich gemäß gezeichnetem Ausführungsbeispiel ein Doppel-Querport 21, 22 einer Umschalteinrichtung 1 freigelassen ist bzw. daran kein Kommunikationsteilnehmer angeschlossen ist, bleibt die Doppelringstruktur für die Kommunikationsfähigkeit uneingeschränkt erhalten. Denn die anhand von Figur 2 beschriebenen Unterbrechungslängsschalter S33, S34 sind mangels Kommunikationsteilnehmer geschlossen, während die Unterbrechungsquerschalter S31, S32, wie in Figur 6A bei der Umschalteinrichtung 1 mit dem freigelassenen Doppelport 21,22 ersichtlich, geöffnet sind und unterbrechen. Die Erhaltung der Doppelringstruktur wäre auch bei einem Knoten-/Teilnehmerausfall am Doppelport 21, 22 gegeben. Dagegen befinden sich die Umschalteinrichtungen 1 mit angeschlossenen, funktionsfähigen Teilnehmern 2 (Kommunikationsslaves) in einem Schaltzustand, in dem die Unterbrechungslängsschalter S33, S34 geöffnet sind bzw. unterbrechen. Dadurch wird in die Längsports 11, 12 ein- bzw. ausgehender Datenstrom zu den Querports 21, 22 und damit zu dem angeschlossenen Kommunikationsteilnehmer umgeleitet. Aufgrund der einfachen Schaltstruktur können die Umschalteinrichtungen 1 mit sehr einfach strukturierten Logikschaltungen realisiert werden, woraus sich eine hohe Verfügbarkeit und geringer Wartungsbedarf ergibt.

Es ist anhand der Figur 6A auch erkennbar, dass mit dem Erfindungsprinzip grundsätzlich beliebige Kommunikationsteilnehmer/Netzwerkknoten 2 in beliebiger Anzahl gleichzeitig oder nacheinander vom ringförmigen Netzwerk abgetrennt werden können, und die Doppelring-Kommunikation aufgrund der geschlossenen Längsschalter S33, S34 zwischen den Längsports 11, 12 gleichwohl erhalten bleibt. Alle Kommunikationsteilnehmer/Netzwerkknoten 2 sind aus der Sicht der Kommunikation gleichwertig: Es existiert keiner, dessen Ausfall sich kritischer auf die Verfügbarkeit der Kommunikation auswirken würde als ein anderer.

Gemäß Figur 6A entspricht ein TX/RX-Paar eines Ports einer physikalischen Ethernet-Verbindung, die beispielsweise mit an sich bekannten RJ45-Steckverbindungen realisiert werden. Letztere können beispielsweise die Anschlusselemente einer in Figur 6A gestrichelt umrahmten Multiport-Vermittlungseinrichtung 26 für aktive Kommunikationsteilnehmer/Knoten 2 sein. Die Vermittlungseinrichtung 26 zeichnet sich zumindest durch eine Mehrzahl, in der Ringstruktur hintereinander angeordneter Umschalteinrichtungen 1 aus. Optional können gemäß Figur 6A noch eine Masterkoppeleinrichtung 13M, eine einfache Koppeleinrichtung 13A und/oder ein oder mehrere Repeater in die Doppelringkette eingefügt sein. Zweckmäßig sind all diese Komponenten in einem gemeinsamen Gehäuse oder auf einer gemeinsamen Hutschiene oder dergleichen zusammengefasst oder sonstwie baulich miteinander integriert. Aufgabe dieser Vermittlungseinrichtung 26 ist es unter anderem, den Datenfluss entsprechend einer Ringstruktur, vorzugsweise Doppelringstruktur, aufrechtzuerhalten, unabhängig davon, ob die Querports 21, 22, 23 mit aktiven Kommunikationsteilsnehmern/Knoten 2 belegt sind oder nicht. Dafür sorgt die anhand von Figur 1 und 2 Umschaltlogik der Umschalteinrichtungen. Eine derartige Umschalteinlogik kann auch in den Prozesseinheiten M und A der Koppeleinrichtungen 13M, 13A implementiert sein. Innerhalb der Multiport-Vermittlungseinrichtung 26 werden über die jeweiligen Längsports 11, 12 der Umschalteinrichtungen 1 und Koppeleinrichtungen 13M, 13A die beiden gegenläufigen Datenströme kettenartig in jedem Fall, mit oder ohne aktive Kommunikationsteilnehmer/Knoten 2, weitergereicht. Für letztere bildet die Vermittlungseinrichtung eine Zentrale entsprechend einer Sterntopologie mit all den Vorteilen der Verfügbarkeit und Wartbarkeit. Intern allerdings arbeitet und/oder kommuniziert die Vermittlungseinrichtung entsprechend einer Ringtopologie mit den Vorteilen hinsichtlich Echtzeitanforderungen.

Mit der Multiport-Vermittlungseinrichtung gemäß Figur 6A ist der Weg zu einer skalierbaren bzw. normierbaren Hardware mit einer Mehrzahl von Anschlüssen für externe Teilnehmer (zum Beispiel mit RJ45-Stecker realisiert) eröffnet, für welche diese einen zentralen Sternpunkt bilden kann. Der IP-Kanal 25 lässt sich ebenfalls mit RJ45-Ports beispielsweise für den Zugriff von externen Fehlerdiagnosesystemen (vgl. DE-C-196 14 748) verwirklichen. Freigelassene (Dopppel-) Ports 21, 22, 23 werden aufgrund der genannten Schaltlogik überbrückt, so dass der redundante Doppelring erhalten bleibt. Mittels des Einsatzes der beiden Repeater R gemäß Figur 6A innerhalb der Vermittlungseinrichtung 26 lässt sich eine einfachere Installation der für den Doppelring notwendigen Rückleitung erzielen, was auch den Umstand Rechnung trägt, dass die Leitungslänge im Ethernet an sich begrenzt ist.

Auch innerhalb der Vermittlungseinrichtung 26 kommt nun die bereits angesprochene Eigenschaft des Empfängers RX zum Tragen, wonach beim Erkennen einer elektrischen Verbindung bzw. der Kommunikationsfähigkeit des externen Sender TX eines Knotens das Kommunikationsflag Link gesetzt wird. Die Masterkoppeleinrichtung 13M mit dem Prozessor M koordiniert den Echtzeit-Ethernetz-Feldbus mit Ringstruktur. Der Prozessor bzw. die Prozesseinheit M kann mit einem Embedded Industrie-PC realisiert sein.

Zur Erhöhung der Sicherheit gegen Ausfälle des aktiven Kommunikationsmasters ist es zweckmäßig, dessen Funktion mehrfach verfügbar bzw. redundant im Ringnetzwerk vorzuhalten. Diese Redundanz ist in den gekoppelten Doppelring-/Kammstrukturen gemäß Figuren 6B und 6C angelegt. Neben dem aktuellen Kommunikationsmaster in Form der Master-Koppeleinrichtung 13M sind nämlich auf der Ebene der Multiport-Vermittlungseinrichtung 26 mehrere Netzwerk-Koppeleinrichtungen 13N in der Doppelring-Struktur hintereinander eingefügt. Sie können beispielsweise Bridgerouter oder dergleichen für kommunikationstechnisch voneinander getrennte Feldbus-Segmente 27 bilden, welche im konkreten Beispielfall Kommunikationsringe für eine Vielzahl von elektrischen Antrieben sein können. Die Netzwerk-Koppeleinrichtungen 13N ermöglichen die Datenübertragung zwischen den Feldbussegmenten 27 über die Multiport-Vermittlungseinrichtung 26. Dabei lässt sich der Datenverkehr leicht auf das Notwendige beschränken, ein unnötiges Übertragen von Daten zwischen zwei unterschiedlichen Segmenten 27 braucht nicht zu erfolgen. Im Übrigen gelten alle Eigenschaften, Merkmale der in Figur 6A beschriebenen Struktur auch hier analog. Mit der Ausbildung gemäß Figur 6B und 6C wird den Anforderungen umfassender, industrieller Kommunikationssysteme Rechnung getragen, bei denen es sinnvoll ist, mehrere Feldbus-Segmente 27 kommunikationstechnisch voneinander zu trennen und nur notwendige Daten und Informationen über die "Bridgerouter" in Form der Netzwerkkoppeleinrichtungen 13N auszutauschen. Da letztere, wie oben beschrieben, mit Prozessorkapazitäten mehrfach ausgestattet sind, womit sowohl die Funktionen eines Kommunikationsmasters als auch eines Kommunikationsslaves erfüllt werden können, können diese im Falle des Ausfalles des aktiven originären Kommunikationsmasters in Form der Master-Koppeleinrichtung 13M dessen Funktion ersetzen. Die Redundanz der Kommunikationsmasterfunktion ergibt sich also aus der Einfügung der Netzwerk-Koppeleinrichtungen 13N in das Ringnetzwerk. Letztere ermöglichen auch die im Bereich elektrischer Multi-Einzelantriebssysteme vielfach erstrebte Kamm-Struktur (wonach eine Querkommunikation im Bereich der Multiport-Vermittlungseinrichtung und eine davon kommunikationstechnisch getrennte "Vertikalkommunikation" in den Feldbussegmenten 27 stattfindet).

### Bezugszeichenliste

- 1: Umschalteinrichtung
- 2: Netzwerkknoten
- 3: Längsempfänger
- 4: Querempfänger
- 5: Quersender
- 6: Längssender
- 7: Verarbeitungseinheit
- S31, S32: Unterbrechungsquerschalter
- Link: Kommunikationsflag
- S33, S34: Unterbrechungslängsschalter
- 01, 02, 11, 12: Längsports
- 21,22,23: Querports
- RX: Empfänger
- TX: Sender
- S11, S12: Loopback-Schalter
- S21, S22: Loopback-Schalter
- 13A: Koppeleinrichtung
- 13M: Master-Koppeleinrichtung
- 13N: Netzwerk-Koppeleinrichtung
- A, M: Prozessbaugruppe
- DATA-IF: Datenschnittstelle
- R: Repeater
- 24a, 24b: Leitungspaar
- 25: IP-Kanal
- 26: Multiport-Vermittlungseinrichtung
- 27: Feldbussegment

## Patentansprüche

**1.** Verfahren zum Tolerieren eines Ausfalls und/oder einer Auskopplung mindestens eines Netzwerk-Knotens (2) in beziehungsweise aus einem Kornmunikations-Netzwerk, das zur Steuerung und/oder Regelung der Bewegung einer Mehrzahl Maschinenteile verwendet wird, wobei das Netzwerk entsprechend einer geschlossenen Doppelringstruktur betrieben wird, in welcher jeder Knoten (2) über zwei bidirektionale Kommunikationsports (11,12), die je einen Sender (TX) und Empfänger (RX) aufweisen, mit beidseits benachbarten Knoten (2) kommuniziert, und die geschlossene Ringstruktur beim Ausfall oder der Auskopplung wenigstens eines der Knoten (2) beibehalten wird, indem mindestens einer der Knoten (2) an das Netzwerk über eine Datenpfad-Umschalteinrichtung (1) angekoppelt wird, die beim Ausfall oder der Auskopplung dieses Knotens (2) derart betätigt wird, dass die im Netzwerk als kommunikationsfähig verbliebenen und nach dem Ausfall oder der Auskopplung in der Ringstruktur einander nächst liegenden Knoten (2) über ihren jeweiligen Port (11,12) oder Sender (TX) und Empfänger (RX) miteinander in Kommunikation gesetzt werden, und wobei mindestens eine Umschalteinrichtung (1) mit bidirektionalen Kommunikationsports (11,12,21,22) verwendet wird, von denen zwei (11,12) beidseits benachbarten Knoten (2) zugeordnet werden, **dadurch gekennzeichnet, dass** zwei weitere bidirektionale Kommunikationsports (21,22) der Umschalteinrichtung (1) dem anzukoppelnden Knoten (2) zugeordnet und zur Erzeugung von Kommunikationsflags (Link) zum Hinweis verwendet werden, ob der anzukoppelnde Knoten (2) kommunikationsfähig ist oder nicht, wobei im letzteren Fall die Umschalteinrichtung (1) abhängig von den Kommunikationsflags (Link) derart angesteuert wird, dass die dem anzukoppelnden Knoten (2) zugeordneten Ports (21,22) der Umschalteinrichtung (1) und/oder der anzukoppelnde Knoten (2) überbrückt und dabei von der Ringstruktur abgetrennt werden.

**2.** Verfahren nach Anspruch 1, **dadurch gekennzeichnet, dass** eine Umschalteinrichtung (1) mit mindestens einem Empfänger (RX,4) verwendet wird, welcher einem Sender (TX) des anzukoppelnden Knotens (2) zugeordnet wird und ein Kommunikationsflag (Link) zum Hinweis generiert, ob der Knoten (2) kommunikationsfähig ist oder nicht, wobei im letzteren Fall die Umschalteinrichtung (1) abhängig vom Kommunikationsflag (Link) derart angesteuert wird, dass der Empfänger (RX,4) der Umschalteinrichtung (1) und/oder der anzukoppelnde Knoten (2) überbrückt und dabei von der Ringstruktur abgetrennt werden.

**3.** Verfahren nach einem der vorangehenden Ansprüche, wobei das Netzwerk entsprechend Echtzeitanforderungen betrieben wird, **dadurch gekennzeichnet, dass** die Umschalteinrichtung (1) und/oder eine gegebenenfalls mit ihr integrierte Koppeleinrichtung (13A) mit einer Prozesseinheit (A) oder Prozessormitteln versehen ist und zur Ankopplung eines Datenverarbeitungssystems an das Netzwerk verwendet wird, welches Datenverarbeitungssystem mit vom Netzwerk abweichender Kommunikationsstruktur und/oder Netztopologie arbeitet und/oder nicht für Echtzeitanforderungen ausgelegt ist.

**4.** Verfahren nach Anspruch 3, **dadurch gekennzeichnet, dass** das Netzwerk auf der Basis von Echtzeit-Ethemet und/oder das Datenverarbeitungssystem auf der Basis von Nicht-Echtzeitbeziehungsweise Standard-Ethemet betrieben werden.

**5.** Verfahren nach Anspruch 3 oder 4, **dadurch gekennzeichnet, dass** die Prozesseinheit (A) oder Prozessormittel zum Einspeisen von Standard-Ethernet-Datentelegrammen und/oder Daten gemäß Intemetprotokoll aus dem Datenverarbeitungssystem in das Netzwerk derart verwendet wird, dass die Echtzeit-Datenübertragung im Netzwerk nicht gestört wird.

**6.** Verfahren nach einem der vorangehenden Ansprüche, wobei das Netzwerk auf der Basis des Master/Slave-Prinzips betrieben wird, **dadurch** 11. Datenpfad-Umschalteinrichtung zur Durchführung des Verfahrens nach einem der vorangehenden Ansprüche, mit internen, ein- und ausgangsseitigen Datenanschlussmitteln, welche erste und zweite bidirektionale Längsports (11,12) mit je einem Längsempfänger (RX) und einem Längssender (TX) aufweisen, und zwischen dem Ausgang des Längsempfängers (RX) des ersten Längsports (11) und dem Eingang des Längssenders (TX) des zweiten Längsports (12) und zwischen dem Eingang des Längssender (TX) des ersten Längsports (11) und dem Ausgang des Längsempfängers (RX) des zweiten Längsports (12) angeordnet und **dadurch gekennzeichnet, dass** die Datenanschlussmittel ferner erste und zweite bidirektionale Querports (21,22) mit je einem Querempfänger (RX) und einem Quersender (TX) aufweisen, und wenigstens die beiden Querempfänger oder Querports (21,22) mit binäre Kommunikationsflags (Link) generierenden Überwachungsmitteln für die Kommunikationsfähigkeit jeweiliger, von extern angekoppelter Quersender oder -ports (2) und/oder Netzwerkknoten (2) versehen sind, und der erste und der zweite Längsschalter (S33,S34) abhängig von dem oder den Kommunikationsfilags (Link) betätigbar sind, so dass bei auf die fehlende Kommunikationsfähigkeit des oder der externen Quersender und/oder Netzwerkknoten (2) hinweisendem oder hinweisenden Kommunikationsflags (Link) eine oder beide Reihen je aus dem Längsempfänger (RX, 11), dem zum Schließen betätigten Längsschalter (S33,S34) und dem Längssender (TX, 12) wenigstens den oder die Querempfänger (RX) der beiden Querports (21, 22) überbrücken, welche das oder die Kommunkationsflags (Link) generieren.
**gekennzeichnet**, dass die Umschalteinrichtung (1) und/oder eine gegebenenfalls mit ihr integrierte Master-Koppeleinrichtung (13M) mit einer Prozesseinheit (M) oder Prozessormitteln versehen ist, welche im Netzwerk als Kommunikationsmaster verwendet werden.

**7.** Verfahren nach einem der vorangehenden Ansprüche, **dadurch gekennzeichnet, dass** die Umschalteinrichtung (1) und/oder eine gegebenenfalls mit ihr integrierte Netzwerk-Koppeleinrichtung (13N) mit mehreren Prozesseinheiten (M1,M2) oder mit Prozessormitteln versehen ist, die zur Kopplung des Netzwerks mit einem gleichartig strukturierten und/oder arbeitenden Nachbar-Netzwerk verwendet werden.

**8.** Verfahren nach Anspruch 7, **dadurch gekennzeichnet, dass** die Umschalteinrichtung (1) und/oder die Netzwerk-Koppeleinrichtung (13N) mit Prozessormitteln oder wenigstens zwei Prozessbaugruppen (M1,M2) versehen ist, die zum gegenseitigen Datenaustausch betrieben werden und zum einen als Knoten des Netzwerks und zum anderen als Knoten des Nachbar-Netzwerks verwendet werden.

**9.** Verfahren nach Anspruch 8, wobei das Netzwerk auf der Basis des Master/Slave-Prinzips betrieben wird, **dadurch gekennzeichnet, dass** die Prozessormittel oder Prozessbaugruppen (M1,M2) als Kommunikationsmaster und/oder als Kommunikationsslave verwendet werden.

**10.** Verfahren nach einem der vorangehenden Ansprüche, **dadurch gekennzeichnet, dass** das Netzwerk mit serieller Datenübertragung betrieben wird.

**12.** Umschalteinrichtung nach Anspruch 11, **dadurch gekennzeichnet, dass** der Ausgang des Längsempfängers (3) unmittelbar mit dem Eingang des Quersenders (5) verbunden ist.

**13.** Umschalteinrichtung nach Anspruch 11, **gekennzeichnet durch** erste und zweite Querschalter (S31,S32), welche abhängig vom oder von den Kommunikationsflags (Link) betätigbar und derart angeordnet sind, dass sie bei dem oder den auf die Kommunikationsfähigkeit des oder der externen Quersender und/oder Netzwerkknoten (2) hinweisenden Kommunikationsflags (Link) den oder die Ausgänge des oder der Querempfänger (RX,21,22) mit dem oder den Eingängen des oder der Längssender (TX) des oder der Längsports (11,12) verbinden, andernfalls trennen.

**14.** Umschalteinrichtung nach Anspruch 13, **dadurch gekennzeichnet, dass** die beiden Längs- und Querschalter (S31,S32,S33,S34) gemeinsam und/oder gleichzeitig von den die Kommunikationsflags (Link) darstellenden Ausgängen der Querempfänger (RX) oder Querports (21,22) zum Umschalten ansteuerbar sind.

**15.** Umschalteinrichtung nach einem der vorangehenden Ansprüche, **gekennzeichnet durch** eine Realisierung mittels diskreter und/oder elektronisch realisierter Schaltelemente und/oder Schaltnetze.

## Claims

1. A method for tolerating a breakdown and/or a decoupling of at least one network node (2) in or out of a communication network which is used to control and/or adjust the movement of a plurality of machine parts, the network being operated according to a closed double ring structure in which each node (2) communicates with adjacent nodes (2) on both sides via two bi-directional communication ports (11, 12) each having a transmitter (TX) and a receiver (RX), and upon the breakdown or the decoupling of at least one of the nodes (2) the closed ring structure is retained by at least one of the nodes (2) being coupled to the network via a data path switching device (1) which upon the breakdown or the decoupling of this node (2) is operated such that the nodes (2) remaining in the network as communication capable and lying next to one another in the ring structure after the breakdown or the decoupling are placed in communication with one another via their respective port (11, 12) or transmitter (TX) and receiver (RX), and at least one switching device (1) being used with bi-directional communication ports (11, 12, 21, 22), two of which (11, 12) are assigned to adjacent nodes (2) on both sides, **characterised in that** two further bi-directional communication ports (21, 22) of the switching device (1) are assigned to the node (2) to be coupled on and are used in order to produce communication flags (left) to indicate whether the node (2) to be coupled on is capable of communication or not, in the latter case the switching device (1) being controlled independently of the communication flag (left) such that the ports (21, 22) of the switching device assigned to the node (2) to be coupled on and/or the node (2) to be coupled on are bridged and thus separated from the ring structure.

2. The method according to Claim 1, **characterised in that** a switching device (1) with at least one receiver (RX4) is used which is assigned to a transmitter (TX) of the node to be coupled on (2) and generates a
communication flag (left) for indicating whether the node (2) is capable of communication or not, in the latter case the switching device (1) being controlled dependently upon the communication flag (left) such that the receiver (RX,4) of the switching device (1) and/or the node (2) to be coupled on are bridged and thus separated from the ring structure.

3. The method according to any of the preceding claims, the network being operated according to real time requirements, **characterised in that** the switching device (1) and/or a coupling device (13A) optionally integrated with the latter is provided with a processing unit (A) or processor means and is used for coupling a data processing system onto the network, said data processing system operating with a communication structure and/or network topology differing from the network and/or not being designed for real time requirements.

4. The method according to Claim 3, **characterised in that** the network is operated on the basis of real time ethernet and/or the data processing system is operated on the basis of non-real time or standard ethernet.

5. The method according to Claim 3 or 4, **characterised in that** the processing unit (A) or processor means is used for feeding standard ethernet data telegrams and/or data according to internet protocol from the data processing system into the network such that the real time transfer of data within the network is not disrupted.

6. The method according to any of the preceding claims, the network being operated on the basis of the master/slave principle, **characterised in that** the switching device (1) and/or a master coupling device (13M) optionally integrated with the latter is provided with a processing unit (M) or processor means which are used within the network as a communication master.

7. The method according to any of the preceding claims, **characterised in that** the switching device (1) and/or a network coupling device (13N) optionally integrated with the latter is provided with a number of processing units (M1, M2) or with processor means, which are used for coupling the network with an adjacent network structured and/or functioning in the same way.

8. The method according to Claim 7, **characterised in that** the switching device (1) and/or the network coupling device (13N) is provided with processor means and at least two processing assemblies (M1, M2) which are operated for the mutual exchange of data and are used on the one hand as a node of the network and on the other hand as a node of the adjacent network.

9. The method according to Claim 8, the network being operated on the basis of the master/slave principle, **characterised in that** the processor means or processing assemblies (M1, M2) are used as a communication master and/or as a communication slave.

10. The method according to any of the preceding claims, **characterised in that** the network is operated with serial data transfer.

11. A data path switching device for implementing the method according to any of the preceding claims, having internal, in- and output side data connection means which have first and second bi-directional longitudinal ports (11, 12) each having a longitudinal receiver (RX) and a longitudinal transmitter (TX), and disposed between the output of the longitudinal receiver (RX) of the first longitudinal port (11) and the input of the longitudinal transmitter (TX) of the second longitudinal port (12) and between the input of the longitudinal transmitter (TX) of the first longitudinal port (11) and the output of the longitudinal receiver (RX) of the second longitudinal port (12), and **characterised in that** the data connection means further have first and second bi-directional lateral ports (21, 22) each having a lateral receiver (RX) and a lateral transmitter (TX), and at least the two lateral receivers or lateral ports (21, 22) are provided with monitoring means generating binary communication flags (left) for the communication capability of respective lateral transmitters or ports (2) and/or network nodes (2) coupled from the outside, and the first and the second longitudinal switch (S33, S34) can be operated dependently upon the communication flag or flags (left) so that with a communication flag or flags (left) pointing to the lack of the communication capability of the external lateral transmitter or transmitters and/or network node or nodes (2) one or both rows from the longitudinal receiver (RX, 11), the longitudinal switch operated for closure (S33, S34) and the longitudinal transmitter (TX, 12) bridge at least the lateral receiver or receivers (RX) of the two lateral ports (21, 22) which generate the communication flag or flags (left).

12. The switching device according to Claim 11, **characterised in that** the output of the longitudinal receiver (3) is connected directly to the input of the lateral transmitter (5).

13. The switching device according to Claim 11, **characterised by** first and second lateral switches (S31, S32) which can be operated dependently upon the communication flag or flags (left) and are arranged such that with the communication flag or flags (left) pointing to the communication capability of the external lateral transmitter or transmitters and/or network node or nodes (2) they connect, or otherwise separate the output or outputs of the lateral receiver or receivers (RX, 21, 22) to the input or inputs of the longitudinal transmitter or transmitters (TX) of the longitudinal port or ports (11, 12).

14. The switching device according to Claim 13, **characterised in that** the two longitudinal and lateral switches (S31, S32, S33, S34) can be controlled together and/or at the same time by the outputs of the lateral receivers (RX) or lateral ports (21, 22) representing the communication flags (left).

15. The switching device according to any of the preceding claims, **characterised by** realisation by means of discrete and/or electronically realised switching elements and/or switching networks.

## Revendications

1. Procédé pour établir une tolérance à un dysfonctionnement et/ou un découplage d'au moins un noeud de réseau (2) dans et/ou depuis un réseau de communication utilisé pour la commande et/ou la régulation du mouvement d'une multiplicité d'éléments de machine, dans lequel le réseau est exploité sur la base d'une structure en anneau double fermée, dans laquelle chaque noeud (2) communique, par l'intermédiaire de deux ports de communication bidirectionnels (11, 12) comportant chacun un émetteur (TX) et un récepteur (RX) avec deux noeuds voisins (2) des deux côtés, et la structure en anneau fermée est conservée en cas de dysfonctionnement ou de découplage d'au moins l'un des noeuds (2), du fait que l'un au moins des noeuds (2) est couplé au réseau par l'intermédiaire d'un dispositif de commutation de chemin de données (1), qui, en cas de dysfonctionnement ou de découplage de ce noeud (2), est commandé de façon que les noeuds (2) restés en état d'assurer la communication dans le réseau et placés le plus près l'un de l'autre dans la structure en anneau après le dysfonctionnement ou le découplage, soient mis en communication l'un avec l'autre par l'intermédiaire de leurs ports (11, 12) ou émetteur (TX) et récepteur (RX) respectifs, et dans lequel l'on utilise au moins un dispositif de commutation (1) comprenant des ports de communication bidirectionnels (11, 12, 21, 22), dont deux (11,12) sont de chaque côté associés à des noeuds (2) voisins, **caractérisé en ce que** deux autres ports de communication bidirectionnels (21, 22) du dispositif de commutation (1) sont associés au noeud à coupler (2) et sont utilisés pour générer des indicateurs de communication (link) destinés à signaler si le noeud à coupler (2) est en état d'assurer ou non la communication, le dispositif de commutation (1), dans la négative, étant commandé en fonction des indicateurs de communication (link), de façon que les ports (21, 22), associés au noeud à coupler (2) du dispositif de commutation (1) et/ou le noeud à coupler (2) soient court-circuités et ce faisant soient isolés de la structure en anneau.

2. Procédé selon la revendication 1, **caractérisé en ce qu'**on utilise un dispositif de commutation (1) comprenant au moins un récepteur (RX, 4), qui est associé à un émetteur (TX) du noeud à coupler (2) et génère un indicateur de communication (link) destiné à signaler si le noeud (2) est en état d'assurer ou non la communication, le dispositif de commutation (1), dans la négative, étant commandé, en fonction de l'indicateur de communication (link), de façon que le récepteur (RX, 4) du dispositif de commutation (1) et/ou le noeud à coupler (2) soient court-circuités et ce faisant soient isolés de la structure en anneau.

3. Procédé selon l'une des revendications précédentes, le réseau étant exploité selon des contraintes de temps réel, **caractérisé en ce que** le dispositif de commutation (1) et/ou un dispositif de couplage (13A), éventuellement intégré à ce dernier, est équipé d'une unité de traitement (A) ou de moyens formant processeur et est utilisé pour coupler un système de traitement de données au réseau, lequel système de traitement de données fonctionne avec une structure de communication et /ou une topologie de mise en réseau différente du réseau et/ou n'est pas conçu pour des contraintes de temps réel.

4. Procédé selon la revendication 3, **caractérisé en ce que** le réseau est exploité sur la base de l'Ethernet temps réel et/ou le système de traitement de données est exploité sur la base de l'Ethernet non temps réel ou de l'Ethernet standard.

5. Procédé selon la revendication 3 ou 4, **caractérisé en ce que** l'unité de traitement (A) ou les moyens formant processeur sont utilisés pour injecter des télégrammes de données en Ethernet standard et /ou des données conformes au protocole Internet, du système de traitement de données dans le réseau, de façon que la transmission de données en temps réel dans le réseau ne soit pas perturbée.

6. Procédé selon l'une des revendications précédentes, dans lequel le réseau est exploité sur la base du principe maître-esclave, **caractérisé en ce que** le dispositif de commutation (1) et/ou un dispositif de couplage pilote (13M) éventuellement intégré à ce dernier, est équipé d'une unité de traitement (M) ou de moyens formant processeur, qui sont utilisés comme pilote de communication dans le réseau.

7. Procédé selon l'une des revendications précédentes, **caractérisé en ce que** le dispositif de commutation (1) et/ou un dispositif de couplage de réseau (13N), éventuellement intégré à ce dernier, est équipé de plusieurs unités de traitement (M1, M2) ou de moyens formant processeur, qui sont utilisés pour le couplage du réseau à un réseau voisin structuré et/ou fonctionnant de façon identique.

8. Procédé selon la revendication 7, **caractérisé en ce que** le dispositif de commutation (1) et/ou le dispositif de couplage de réseau (13N) est équipé de moyens formant processeur ou d'au moins deux modules de traitement (M1, M2), qui sont exploités pour l'échange réciproque de données et sont utilisés, d'une part, comme noeud du réseau et, d'autre part, comme noeud du réseau voisin.

9. Procédé selon la revendication 8, dans lequel le réseau est exploité sur la base du principe maître-esclave, **caractérisé en ce que** les moyens formant processeur ou les modules de traitement (M1, M2) sont utilisés comme pilote de communication et/ou comme ensemble de communication asservi.

10. Procédé selon l'une des revendications précédentes, **caractérisé en ce que** le réseau est exploité avec une transmission de données en série.

11. Dispositif de commutation de chemin de données pour la mise en oeuvre du procédé selon l'une des revendications précédentes, comportant des moyens de connexion de données internes, côté entrée et côté sortie, qui comportent des premier et deuxième ports longitudinaux bidirectionnels (11, 12), pourvus chacun d'un récepteur longitudinal (RX) et d'un émetteur longitudinal (TX), et sont disposés entre la sortie du récepteur longitudinal (RX) du premier port longitudinal (11) et l'entrée de l'émetteur longitudinal (TX) du deuxième port longitudinal (12) et entre l'entrée de l'émetteur longitudinal (TX) du premier port longitudinal (11) et la sortie du récepteur longitudinal (RX) du deuxième port longitudinal (12), **caractérisé en ce que** les moyens de connexion pour données comportent en outre des premier et deuxième ports transversaux bidirectionnels (21, 22), qui présentent chacun un récepteur transversal (RX) et un émetteur transversal (TX), les deux récepteurs transversaux ou ports transversaux (21, 22), au moins, étant équipés de moyens de surveillance de l'aptitude d'émetteurs transversaux ou de ports transversaux (2) et/ou de noeuds de réseau (2) respectifs, couplés de l'extérieur, à assurer la communication, qui génèrent des indicateurs de communication (link) binaires, et **en ce que** les premier et deuxième interrupteurs longitudinaux (S33, S34) sont actionnables en fonction de l'indicateur ou des indicateurs de communication (link) de telle façon que lorsque l'indicateur ou les indicateurs de communication (link) signale(nt) l'incapacité à assurer la communication du ou des émetteurs transversaux externes et/ou du ou des noeuds externes de réseau (2), un montage en série ou les deux montages en série, respectivement constitués du récepteur longitudinal (RX, 11), de l'interrupteur longitudinal (S33, S34), actionné dans le sens de la fermeture, et de l'émetteur longitudinal (TX, 12), court-circuitent au moins le ou les récepteurs transversaux (RX) des deux ports transversaux (21, 22), qui génèrent le ou les indicateurs de communication (link).

12. Dispositif de commutation selon la revendication 11, **caractérisé en ce que** la sortie du récepteur longitudinal (3) est reliée directement à l'entrée de l'émetteur transversal (5).

13. Dispositif de commutation selon la revendication 11, **caractérisé par** des premier et deuxième interrupteurs transversaux (S31, S32), qui sont actionnables en fonction de l'indicateur ou des indicateurs de communication (link) et sont positionnés de façon que lorsque l'indicateur ou les indicateurs de communication (link) signale(nt) l'aptitude du ou des émetteurs transversaux externes et/ou du ou des noeuds externes de réseau (2) à assurer la communication, ils relient la ou les sorties du ou des récepteurs transversaux (RX, 21, 22) à l'entrée ou aux entrées du ou des émetteurs longitudinaux (TX) du ou des ports longitudinaux (11, 12) et, dans le cas inverse, les séparent.

14. Dispositif de commutation selon la revendication 13, **caractérisé en ce que** les deux interrupteurs longitudinaux et les deux interrupteurs transversaux (S31, S32 ; S33, S34) peuvent être commandés conjointement et/ou simultanément pour effectuer la commutation, par les sorties représentant les indicateurs de communication (link), des récepteurs transversaux (RX) ou des ports transversaux (21,22).

15. Dispositif de commutation selon l'une des revendications précédentes, **caractérisé par** une configuration utilisant des circuits logiques et/ou des réseaux combinatoires discrets et/ou réalisés électroniquement.
